# FASCICULE DE BREVET EUROPEEN

(11) **EP 2 533 366 B1**
(45) Date de publication et mention de la délivrance du brevet: **25.03.2015**
(21) Numéro de dépôt: 11305725.1
(22) Date de dépôt: 09.06.2011
(51) Int. Cl.: H01R 11/28, H01R 13/53, H01R 13/66, H01R 101/00, G01R 19/00, H02B 13/035, H04B 3/56

(54) **Systeme de connexion electrique moyenne tension muni d'un dispositif de couplage hautes fréquences**
Elektrisches Mittelspannungs-Anschlusssystem, das mit einer HF-Kupplungsvorrichtung ausgestattet ist
High voltage electrical connection system provided with a high frequency coupling device

(43) Date de publication de la demande: 12.12.2012
(73) Titulaire: Nexans, 75008 Paris (FR)
(72) Inventeur: de Ridder, Eduard, B-9310 HERDERSEM-AALST (BE)
(74) Mandataire: Allain, Laurent

(56) Documents cités:
- EP-A1- 0 147 979
- EP-A1- 1 521 381
- WO-A1-00/59076

## Description

L'invention se rapporte à un connecteur électrique et à un système de connexion électrique comprenant un tel connecteur. Le domaine technique de l'invention se situe au niveau des circuits électriques à moyenne tension impliquant des dispositifs de couplage, pour la réception ou la transmission de signaux analogiques ou numériques par l'intermédiaire d'un système de distribution de puissance électrique.

De tels dispositifs de couplage à moyenne tension existent et ont déjà fait l'objet de brevets. On peut, par exemple, citer le brevet EP1521381, qui se rapporte à un dispositif de couplage utilisant un condensateur de couplage « moyenne tension », et un circuit de réglage, qui reçoit le signal à une tension inférieure à celle du câble à moyenne tension. La principale caractéristique de ce système de couplage est qu'il est formé par un boitier étanche à l'eau logeant le condensateur à moyenne tension, un écran servant à distribuer le champ électrique, ainsi que le circuit de réglage. Le boitier vient se placer à la partie arrière d'un connecteur électrique en étant emboité dans un espace prévu à cet effet, ledit boitier servant également de bouchon d'isolation et d'étanchéité à l'eau pour ledit connecteur. Cet agencement particulier entre le connecteur et le dispositif de couplage n'est pas conçu spécifiquement dans l'optique de limiter l'encombrement de l'ensemble obtenu.

Les systèmes de connexion de circuits électriques « moyenne tension », font intervenir divers appareillages ou équipements servant d'interfaces de connexion, et sur lesquels viennent s'enficher des connecteurs électriques, lesdits appareillages ou équipements étant généralement dimensionnés au plus juste de façon à réduire leur encombrement. De plus, les connecteurs électriques sont enfichés à force dans ces appareillages et ne disposent généralement pas d'un espace suffisant pour pouvoir être déconnectés facilement desdits appareillages en cas de besoin. En particulier, ils ne disposent pas d'un dégagement suffisant à l'arrière pour pouvoir être retirés facilement et sans contrainte. Or, dans le cadre du rétrofitage de certaines installations électriques déjà existantes, il est prévu d'équiper les circuits électriques « moyenne tension » avec des dispositifs de couplage, qui viendraient se positionner au niveau de ces appareillages en liaison avec les connecteurs. Le peu d'espace disponible laissé vacant dans ces appareillages, ainsi que les difficultés à retirer les connecteurs pour pouvoir installer ces dispositifs de couplage, rendent difficiles voire impossibles ces opérations d'implantation de dispositifs de couplage.

Les systèmes de connexion « moyenne tension » selon l'invention, mettent en oeuvre des connecteurs électriques, spécialement dimensionnés pour favoriser l'incorporation de dispositifs de couplage dans les espaces étroits et peu accessibles, laissés vacants dans lesdits appareillages. L'utilisation de tels connecteurs permet un réaménagement aisé et performant des installations électriques déjà existantes, en incorporant notamment des dispositifs de couplage.

L'invention se rapporte à un connecteur électrique pour un circuit électrique à moyenne tension comprenant un appareillage servant d'interface de connexion, ledit connecteur électrique étant apte à venir s'enficher dans ledit appareillage et comprenant deux segments perpendiculaires l'un par rapport à l'autre, le premier segment comprenant une douille emmanchable autour d'un plot fixe faisant saillie dans l'appareillage, et le deuxième segment, étant relié à un câble électrique, intégrant un dispositif de couplage pour la réception et la transmission de signaux d'information haute fréquence.

La principale caractéristique d'un connecteur électrique selon l'invention est que le deuxième segment intègre un dispositif de couplage pour la réception et la transmission de signaux d'information haute fréquence et que le dispositif de couplage est logé dans un compartiment s'étendant dans la même direction que le premier segment.

De cette manière, le compartiment crée une protubérance au niveau du connecteur, qui s'étend selon le premier segment, limitant ainsi l'encombrement du connecteur, en évitant de créer au niveau dudit connecteur une direction d'expansion supplémentaire. Habituellement, un système de couplage permettant de réceptionner et/ou de transmettre des signaux analogiques ou numériques sont dissociés des connecteurs, et viennent se solidariser à ceux-ci comme une pièce rapportée. L'intégration d'un tel dispositif de couplage dans un connecteur permet de regrouper en une seule opération les phases d'implantation du connecteur et du dispositif de couplage dans le circuit électrique, et donc de diviser par deux le nombre total d'opérations de montage de ces éléments. Ainsi, en fonction de la topographie des lieux, notamment celle de l'appareillage, le dispositif de couplage pourra être positionné à l'endroit le plus adapté sur le connecteur, de façon à venir occuper les quelques espaces étroits laissés disponibles au niveau dudit appareillage. De façon avantageuse, l'appareillage est de type «switchgear ». L'intégration du dispositif de couplage dans le connecteur est réalisée de façon à obtenir un objet le plus compact possible, sans favoriser une direction d'expansion particulière. Rassembler deux pièces en une seule, limite les risques de perte desdites pièces. De plus, cela limite les risques d'oublier de monter le dispositif de couplage, puisque le branchement du connecteur sur l'appareillage pour fermer le circuit électrique est une opération indispensable.

Avantageusement, le compartiment demeure en retrait du premier segment. Avec une telle configuration, les dimensions du compartiment logeant le dispositif de couplage demeurent inférieures à celles du connecteur et ne contribuent pas à accentuer son encombrement.

De façon préférentielle, le dispositif de couplage comprend un condensateur de couplage et un conducteur interne reliant ledit condensateur à la douille.

De façon avantageuse, le dispositif de couplage est doté d'un circuit électronique comprenant au moins un diviseur de tension, au moins un dispositif de protection, et un filtre à hautes fréquences.

Préférentiellement, le connecteur est muni d'un capteur de courant.

Avantageusement, le connecteur est muni d'un capteur de tension.

L'invention se rapporte également à un système de connexion électrique pour un circuit électrique à moyenne tension, comprenant un appareillage servant d'interface de connexion, et au moins un connecteur électrique conforme à l'invention et apte à venir s'enficher dans ledit appareillage par l'intermédiaire de la douilledu premier segment venant s'emmancher autour d'un plot fixe faisant saillie dans ledit appareillage.

Les systèmes de connexion électrique selon l'invention présentent le double avantage d'être performants, car ils intègrent au moins un dispositif de couplage, et d'être peu encombrants dans la mesure où chaque dispositif de couplage est intégré au connecteur. Ils ont de plus l'avantage d'être faciles à monter, puisque le connecteur et le dispositif de couplage qui lui est associé constituent une seule et même pièce, et sont donc implantés en une seule opération. Enfin, ils présentent une certaine sécurité de fonctionnement, puisque le connecteur et le dispositif de couplage qui lui est associé, ont peu de chance d'être séparés accidentellement et donc de créer un dysfonctionnement.

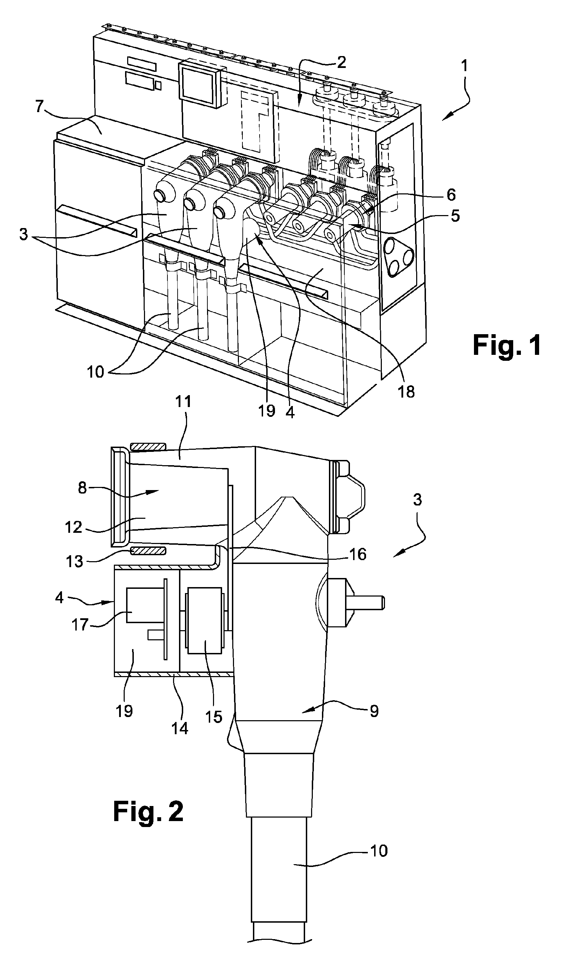

On donne ci-après une description détaillée d'un mode de réalisation préféré d'un système de connexion et d'un connecteur selon l'invention, en se référant aux figures 1 et 2.
- La figure 1 est une vue en perspective d'un système de connexion électrique selon l'invention, et comprenant un appareillage électrique servant d'interface de connexion et des connecteurs électriques,
- La figure 2 est une vue en coupe d'un connecteur électrique selon l'invention, et comprenant un dispositif de couplage,

En se référant à la figure 1, un système de connexion 1 selon l'invention et réalisés dans le cadre de la mise en oeuvre de circuits électriques « moyenne tension », implique un appareillage électrique 2 de type « switchgear » et des connecteurs électriques 3 prévus pour venir s'enficher dans ledit appareillage 2. Chaque circuit électrique « moyenne tension », est également équipé d'un dispositif de couplage 4 permettant de récupérer ou de transmettre des signaux analogiques et/ou numériques à hautes fréquences. L'appareillage 2 est doté d'une pluralité de plots 5 métalliques, assimilables à des pièces creuses tronconiques et munies chacune d'un socle 6 de fixation circulaire. Ces plots 5 sont rectilignes, et saillent perpendiculairement de la surface 7 sur laquelle ils sont implantés. Un tel appareillage électrique 2 possède ainsi six plots métalliques 5, alignés selon une direction horizontale de l'appareillage 2. Chaque circuit électrique « moyenne tension » est relié audit appareillage 2 par l'intermédiaire d'un connecteur électrique 3, dans lequel est intégré le dispositif de couplage 4, et conçu pour venir s'enficher autour d'un plot métallique 5 de l'appareillage 2.

En se référant à la figure 2, un connecteur électrique 3 selon l'invention, possède deux segments perpendiculaires 8,9, le premier segment 8 étant dimensionné pour venir s'enficher autour d'un plot 5 de l'appareillage 2, et le deuxième segment 9 étant prolongé par un câble électrique 10 constituant le circuit électrique. Le premier segment 8 possède une broche métallique dans une douille 11 tronconique et creuse en matière élastique, dont le canal interne 12 est prévu pour loger un plot 5 de l'appareillage 2, lorsque le connecteur 3 est branché sur ledit appareillage 2. Le premier segment 8 possède également un capteur de courant 13 permettant de détecter le passage du courant, afin d'évaluer l'intensité et la direction du courant qui traverse la connexion électrique sur l'appareillage 2. Le dispositif de couplage 4 est intégré dans le deuxième segment 9 du connecteur 3, dans un compartiment 19 délimité par une paroi cylindrique 14, dont l'axe de révolution est parallèle à l'axe de révolution de la douille 11. La longueur de cette paroi cylindrique 14, qui est sa dimension prise le long de son axe de révolution, est sensiblement égale à celle du premier segment 8. Par ce biais, un connecteur 3 selon l'invention, s'étend essentiellement selon deux directions, l'une matérialisée par l'axe du deuxième segment 9, et l'autre par le plan incluant le premier segment 8 et le compartiment 19 dans lequel est placé le dispositif de couplage 4. Le diamètre externe de la paroi 14 délimitant le compartiment 19 logeant le dispositif de couplage 4, est approximativement égal à celui du premier segment 8. Le dispositif de couplage 4 comprend de façon conventionnelle, un condensateur de couplage 15 relié électriquement à la douille 11 par un conducteur interne 16 s'étendant selon une direction parallèle à l'axe du deuxième segment 9, et un circuit électronique 17 comportant divers éléments, comme par exemple, un filtre à hautes fréquences, un élément de protection prévu pour protéger le circuit électrique dans le cas d'une surtension, et un diviseur de tension. Le circuit électronique 17 est placé vers l'extrémité libre du compartiment 19 la plus éloignée du deuxième segment 9, tandis que le condensateur 15 se retrouve entre ledit circuit électronique 17 et ledit deuxième segment 9.

En se référant à la figure 1, la géométrie particulière des connecteurs 3 ci-avant décrite, a été étudiée puis développée pour tenir compte du petit espace disponible 18 laissé vacant dans les appareillages électriques 2 existants, et situé entre la surface 7 de l'appareillage 3 sur laquelle sont implantés les plots 5, et le deuxième segment 9 du connecteur 3 se retrouvant en position verticale une fois que ledit connecteur 3 a été enfiché autour dudit plot 5. Il est aisé d'imaginer que le dispositif de couplage 4 peut être intégré sur le connecteur 3, à un emplacement différent de celui qui a été précédemment décrit, de façon à tenir compte d'une autre configuration potentielle d'appareillage 2, pour laquelle la position de ces espaces étroits et disponibles 18 serait décalée.

## Revendications

1. Connecteur électrique pour un circuit électrique à moyenne tension comprenant un appareillage (2) servant d'interface de connexion, ledit connecteur (3) électrique étant apte à venir s'enficher dans ledit appareillage (2) et comprenant deux segments (8,9) perpendiculaires l'un par rapport à l'autre, le premier segment (8) comprenant une douille (11) emmanchable autour d'un plot (5) fixe faisant saillie dans l'appareillage (2), et le deuxième segment (9), étant relié à un câble électrique (10), **caractérisé en ce que** le deuxième segment intègre un dispositif de couplage (4) pour la réception et la transmission de signaux d'information haute fréquence, et **en ce que** le dispositif de couplage (4) est logé dans un compartiment (19) s'étendant dans la même direction que le premier segment (8).

2. Connecteur électrique selon la revendication 1, **caractérisé en ce que** le compartiment (19) demeure en retrait du premier segment (8).

3. Connecteur électrique selon l'une quelconque des revendications 1 ou 2, **caractérisé en ce que** le dispositif de couplage (4) comprend un condensateur de couplage (15) et un conducteur interne (16) reliant ledit condensateur (15) à la douille (11).

4. Connecteur électrique selon l'une quelconque des revendications 1 à 3, **caractérisé en ce que** le dispositif de couplage (4) est doté d'un circuit électronique (17) comprenant au moins un diviseur de tension, au moins un dispositif de protection, et un filtre à hautes fréquences.

5. Connecteur électrique selon l'une quelconque des revendications 1 à 4, **caractérisé en ce qu'**il est muni d'un capteur (13) de courant.

6. Connecteur électrique selon l'une quelconque des revendications 1 à 5, **caractérisé en ce qu'**il est muni d'un capteur de tension.

7. Système (1) de connexion électrique pour un circuit électrique à moyenne tension, comprenant un appareillage (2) servant d'interface de connexion, et au moins un connecteur (3) électrique conforme à l'une quelconque des revendications 1 à 6 et apte à venir s'enficher dans ledit appareillage (2) par l'intermédiaire de la douille (11) du premier segment (2) venant s'emmancher autour d'un plot (5) fixe faisant saillie dans ledit appareillage (2).

## Patentansprüche

1. Elektrischer Verbinder für einen Mittelspannungs-Stromkreis, der eine Apparatur (2) umfasst, die als Verbindungsschnittstelle dient, wobei der elektrische Verbinder (3) imstande ist, in die Apparatur (2) eingesteckt zu sein und zwei zueinander lotrechte Segmente (8, 9) umfasst, wobei das erste Segment (8) eine Buchse (11) umfasst, die um einen in die Apparatur (2) hineinragenden festen Kontakt (5) aufpressbar ist, und das zweite Segment (9) mit einem Stromkabel (10) verbunden ist, **dadurch gekennzeichnet, dass** das zweite Segment eine Kopplungsvorrichtung (4) für den Empfang und die Weiterleitung von Hochfrequenz-Informationssignalen integriert und dass die Kopplungsvorrichtung (4) in einem Fach (19) untergebracht ist, das sich in derselben Richtung wie das erste Segment (8) erstreckt.

2. Elektrischer Verbinder nach Anspruch 1, **dadurch gekennzeichnet, dass** das Fach (19) vom ersten Segment (8) entfernt bleibt.

3. Elektrischer Verbinder nach einem der Ansprüche 1 oder 2, **dadurch gekennzeichnet, dass** die Kopplungsvorrichtung (4) einen Kopplungskondensator (15) und einen internen Leiter (16) umfasst, der den Kondensator (15) mit der Buchse (11) verbindet.

4. Elektrischer Verbinder nach einem der Ansprüche 1 bis 3, **dadurch gekennzeichnet, dass** die Kopplungsvorrichtung (4) mit einem elektronischen Kreis (17) ausgestattet ist, der mindestens eine Spannungsteiler, mindestens eine Schutzvorrichtung und einen Hochfrequenzfilter umfasst.

5. Elektrischer Verbinder nach einem der Ansprüche 1 bis 4, **dadurch gekennzeichnet, dass** er mit einem Stromsensor (13) ausgestattet ist.

6. Elektrischer Verbinder nach einem der Ansprüche 1 bis 5, **dadurch gekennzeichnet, dass** er mit einem Spannungssensor ausgestattet ist.

7. Elektrisches Verbindungssystem (1) für einen Mittelspanungs-Stromkreis, das eine Apparatur (2), die als Verbindungsschnittstelle dient, und mindestens einen elektrischen Verbinder (3) nach einem der Ansprüche 1 bis 6 umfasst, der mit Hilfe der Buchse (11) des ersten Segments (2), die um einen festen Kontakt (5), der in die Apparatur (2) hineinragt, aufpressbar ist, mit der Apparatur (2) verbindbar ist.

## Claims

1. An electrical connector for a medium-voltage electrical circuit comprising an apparatus (2) serving as a connection interface, said electrical connector (3) being able to plug into said apparatus (2) and comprising two segments (8, 9) perpendicular to one another, the first segment (8) comprising a bush (11) that can be fitted around a fixed stud (5) protruding in the apparatus (2), and the second segment (9) being connected to an electrical cable (10), **characterized in that** the second segment incorporates a coupling device (4) for receiving and sending high-frequency information signals, and **in that** the coupling device (4) is housed in a compartment (19) extending in the same direction as the first segment (8).

2. The electrical connector according to claim 1, **characterized in that** the compartment (19) remains withdrawn from the first segment (8).

3. The electrical connector according to any one of claims 1 or 2, **characterized in that** the coupling device (4) comprises a coupling capacitor (15) and an internal conductor (16) connecting said capacitor (15) to the bush (11).

4. The electrical connector according to any one of claims 1 to 3, **characterized in that** the coupling device (4) is provided with an electronic circuit (17) comprising at least one voltage divider, at least one protection device, and a high-frequency filter.

5. The electrical connector according to any one of claims 1 to 4, **characterized in that** it is provided with a current sensor (13).

6. The electrical connector according to any one of claims 1 to 5, **characterized in that** it is provided with a voltage sensor.

7. An electrical connection system (1) for a medium-voltage electrical circuit, comprising an apparatus (2) serving as a connection interface, and at least one electrical connector (3) according to any one of claims 1 to 6 and able to plug into said apparatus (2) by means of the bush (11) of the first segment (2) fitting around a fixed stud (5) protruding in said apparatus (2).
